# FASCICULE DE BREVET EUROPEEN

(11) **EP 2 673 129 B1**
(45) Date de publication et mention de la délivrance du brevet: **12.09.2018**
(21) Numéro de dépôt: 12709905.9
(22) Date de dépôt: 06.02.2012
(51) Int. Cl.: B29C 47/08, B29C 47/60, B30B 11/24, B29C 47/38

(54) **VIS DESTINEE A L'EXTRUSION OU AU MELANGEAGE D'ELASTOMERES ET SON PROCÉDÉ D'ASSEMBLAGE**
SCHRAUBE ZUM STRANGPRESSEN ODER MISCHEN VON ELASTOMEREN UND VERFAHREN ZU IHRER MONTAGE
SCREW FOR THE EXTRUSION OR MIXING OF ELASTOMERS AND METHOD FOR FITTING SAME

(30) Priorité: 09.02.2011 FR 1151039
(43) Date de publication de la demande: 18.12.2013
(73) Titulaire: Compagnie Générale des Etablissements Michelin, 63000 Clermont-Ferrand (FR)
(72) Inventeur: ANNET, Pierre, F-63040 Clermont-Ferrand Cedex 9 (FR)
(74) Mandataire: Noel, Luminita
(86) Numéro de dépôt international: PCT/FR2012/050256
(87) Numéro de publication internationale: WO 2012/107678

(56) Documents cités:
- WO-A1-02/20257
- DE-A1- 2 740 028
- DE-B- 1 190 266
- DE-U1- 29 706 744
- DE-U1-202007 010 709

## Description

L'invention concerne les dispositifs d'extrusion ou de mélangeage d'élastomères ou de produits plastiques, notamment pour la fabrication des pneumatiques de roue.

Un dispositif d'extrusion d'élastomères ou de produits plastiques comprend classiquement une vis d'extrusion reçue dans une cavité d'un fourreau. La vis présente différents reliefs, en particulier un ou plusieurs filets dont les fonctions sont variables le long de la vis. Ainsi, sur un tronçon de la vis, le pas du filet est relativement court de sorte qu'il a pour principale fonction de mettre la gomme en pression dans la cavité. Sur un autre tronçon, le filet présente un pas moyen qui accroit la vitesse de la gomme. Enfin, sur un autre tronçon, la vis présente des reliefs tels que des doigts ou des lames de découpe ayant principalement pour fonction de mélanger les différents constituants de la gomme.

Selon le type de pneumatique de roue à fabriquer et la nature de la gomme, on utilise des vis de configurations différentes. Plutôt que de remplacer la vis dans son intégralité, on a envisagé de la réaliser sous la forme d'un arbre recevant des manchons amovibles présentant les reliefs destinés à être en contact avec la gomme. Selon les nécessités de la fabrication, on dispose tels ou tels manchons sur l'arbre afin d'obtenir la configuration de vis souhaitée sans donc avoir à remplacer intégralement la vis. Cet agencement a également pour avantage de permettre de remplacer l'un quelconque des manchons lorsqu'il est usé ou défectueux tout en conservant les autres. Le document DE 27 40 028 divulgue une vis selon le préambule de la revendication 1.

Pour fixer rigidement chaque manchon à l'arbre de la vis, on utilise en règle générale un montage à clavette ou encore un emmanchement de dentures radiales. Toutefois, les efforts auxquels le manchon est soumis au contact de la gomme se trouvent concentrés dans la clavette qui présente ainsi un risque élevé de casser. En outre, sur les tronçons de vis où le manchon a un diamètre particulièrement petit, la fixation par clavette se révèle inappropriée.

Un but de l'invention est de fournir un autre mode de montage des manchons sur la vis.

A cet effet, on prévoit selon l'invention une vis destinée à l'extrusion ou au mélangeage d'élastomères ou de produits plastiques, qui comprend :
- un support,
- au moins un manchon présentant au moins un relief s'étendant en saillie d'une face externe du manchon, et
- au moins un organe de fixation annulaire fendu, l'organe étant serré entre le manchon et le support suivant une direction radiale à un axe de la vis de façon à fixer rigidement le manchon au support,l'organe et le manchon présentant des faces tronconiques de contact mutuel.

Ainsi, grâce au montage serré de l'organe de fixation annulaire, les efforts transmis par le manchon sont répartis sur tout cet organe sans risque de le casser. De plus, ce mode de fixation rigide des manchons est compatible avec tous les diamètres de manchon, et en particulier les plus petits pour lesquels il s'avère très avantageux.

En outre, les faces tronconiques facilitent le montage de l'organe et du manchon l'un à l'autre ainsi que leur démontage. En particulier, ces deux éléments peuvent être préassemblés à la main en étant mis en contact l'un avec l'autre et en recouvrement sur la plus grande partie de leur longueur. C'est seulement le serrage final qui est effectué au moyen d'un outil. Par ailleurs, l'organe de fixation étant fendu, il peut s'ouvrir plus ou moins pour s'adapter aux diamètres respectifs du manchon et du tronçon du support entre lesquels il est interposé radialement. En d'autres termes, l'organe n'est pas bridé en direction circonférentielle. Dans ces conditions, les efforts de serrage imposés par la mise en contact de l'organe et du manchon se transmettent convenablement au support.

De préférence, le manchon ou l'un au moins des manchons présente une épaisseur de paroi inférieure ou égale à 10 mm et de préférence inférieure ou égale à 3 mm.

Cette faible épaisseur améliore la transmission des efforts de serrage qui se trouvent ainsi diffusés sur l'ensemble de la circonférence du support. En fonctionnement, le couple moteur de la vis peut convenablement passer du support à l'organe, puis au manchon.

Avantageusement, l'organe de fixation est fendu suivant une direction parallèle à la direction axiale de l'organe.

On peut prévoir que l'organe de fixation présente au moins deux fentes, par exemple au moins quatre fentes.

Un nombre relativement élevé de fentes facilite la déformation de l'organe.

Avantageusement, les fentes ou au moins deux des fentes s'étendent à partir de bords d'extrémité respectifs différents de l'organe.

On favorise ainsi une bonne répartition de la déformation dans l'organe.

De préférence, l'organe présente une longueur totale inférieure à une longueur totale du manchon.

On peut ainsi mettre les manchons en butée les uns contre les autres suivant la direction de l'axe de la vis pour éviter le passage de matériaux entre les manchons, et ce sans que les organes ne viennent pareillement en butée mutuelle et donc gênent la mise en butée des manchons.

De préférence, l'organe de fixation est en contact avec le manchon par une face de contact tronconique unique de l'organe.

On prévoit également selon l'invention un dispositif d'extrusion ou de mélangeage d'élastomères ou de produits plastiques, qui comprend une vis selon l'invention.

On prévoit aussi selon l'invention un procédé d'assemblage d'une vis destinée à l'extrusion ou au mélangeage d'élastomères ou de produits plastiques, dans lequel on serre suivant une direction radiale à un axe de la vis un organe de fixation annulaire fendu entre un support et un manchon présentant au moins un relief s'étendant en saillie d'une face externe du manchon, de sorte que l'organe et le manchon sont en contact mutuel par des faces tronconiques de l'organe et du manchon et de façon à fixer rigidement le manchon au support.

De préférence, on monte le manchon à force sur le support.

Avantageusement, on étire le support.

Il s'agit d'un mode de mise en oeuvre commode du montage à force. En effet, si on étire le support pendant le serrage de l'organe de fixation et du manchon sur ce dernier, lorsqu'on met fin ensuite à l'étirement, on génère des contraintes résiduelles essentiellement axiales mais également radiales entre les trois éléments, garantes d'une mise en compression et d'un serrage particulièrement intense entre ceux-ci et donc d'une fixation rigide fiable.

De préférence, en prenant appui sur un tronçon proximal du support, par exemple sur une bague rendue solidaire du support ou sur un organe de fixation annulaire serré sur la partie terminale vissée sur le support, on pousse un tronçon distal du support au moyen d'un poussoir intérieur émergeant du tronçon proximal et en butée contre le tronçon distal.

Il s'agit d'un mode de mise en oeuvre de l'étirement qui a pour avantage d'être sécurisé et de laisser dégagé l'extérieur du tronçon distal pour y enfiler des pièces ou des outils de montage.

De préférence, on monte l'organe sur le support, puis on pousse le manchon sur l'organe.

Avantageusement, les manchons étant au moins au nombre de deux, on monte les manchons sur le support de telle sorte que, une fois l'assemblage achevé, les manchons sont en compression axiale mutuelle.

Ainsi, on limite les risques d'intrusion de matériau entre les organes et les manchons lors de l'utilisation de la vis. Cette compression peut résulter de contraintes de compression résiduelle entre les manchons suivant la direction axiale si on a effectué le montage en étirant le support.

On prévoit également selon l'invention un procédé de démontage d'une vis selon l'invention dans lequel on étire le support.

De même que pour le montage, l'étirement facilite l'extraction des manchons et des organes de fixation.

D'autres caractéristiques et avantages de l'invention apparaitront encore dans la description suivante d'un mode de réalisation et d'une variante donnés à titre d'exemples non limitatifs en référence aux dessins annexés sur lesquels :
- la figure 1 est une vue en perspective éclatée d'une vis d'extrusion selon un mode de réalisation de l'invention,
- la figure 2 est une vue en coupe axiale de principe d'une partie de la vis de la figure 1 à l'état monté,
- la figure 3 est une vue en perspective de la vis de la figure 1 et d'une installation de montage illustrant le procédé de montage des manchons sur la vis,
- la figure 4 est une vue analogue à la figure 3 illustrant le procédé de démontage de la vis,
- la figure 5 est une vue en élévation de l'installation de la figure 4,
- les figures 6 et 7 sont des vues respectivement en coupe axiale et transversale selon les plans VI-VI et VII-VII de l'installation des figures 5 et 6 ; et
- la figure 8 est une vue en perspective illustrant une variante de réalisation de l'un des organes de fixation de la vis.

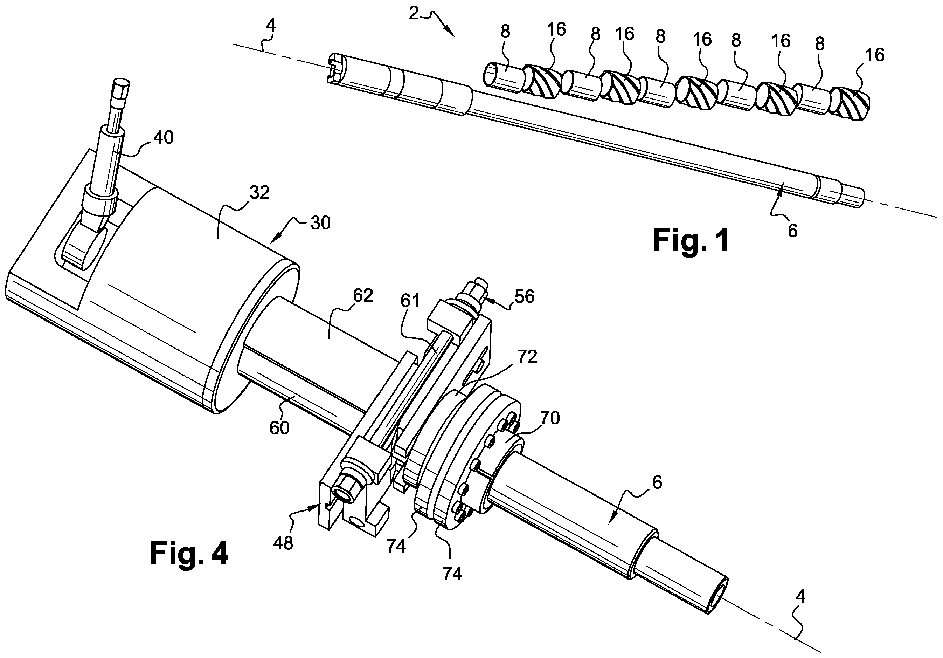

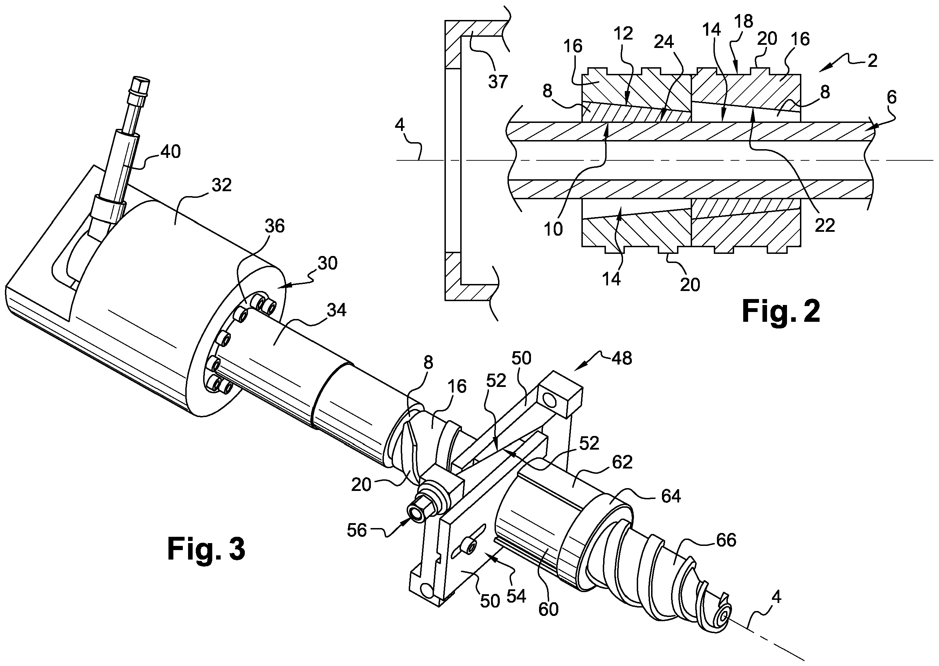

On a illustré aux figures 1 et 2 une vis 2 faisant partie d'un dispositif d'extrusion de gomme servant pour la fabrication de pneumatiques de roue. Ces roues sont destinées par exemple à des véhicules de tourisme, des véhicules légers, des véhicules utilitaires, des véhicules de type poids lourds ou encore à des engins de génie civil. La gomme est constituée par exemple d'un mélange de caoutchouc naturel, de caoutchouc synthétique, de charges renforçantes, d'adjuvants et d'huile. Une des fonctions de la vis peut être en outre d'effectuer une partie au moins du mélange des constituants à l'intérieur du dispositif d'extrusion.

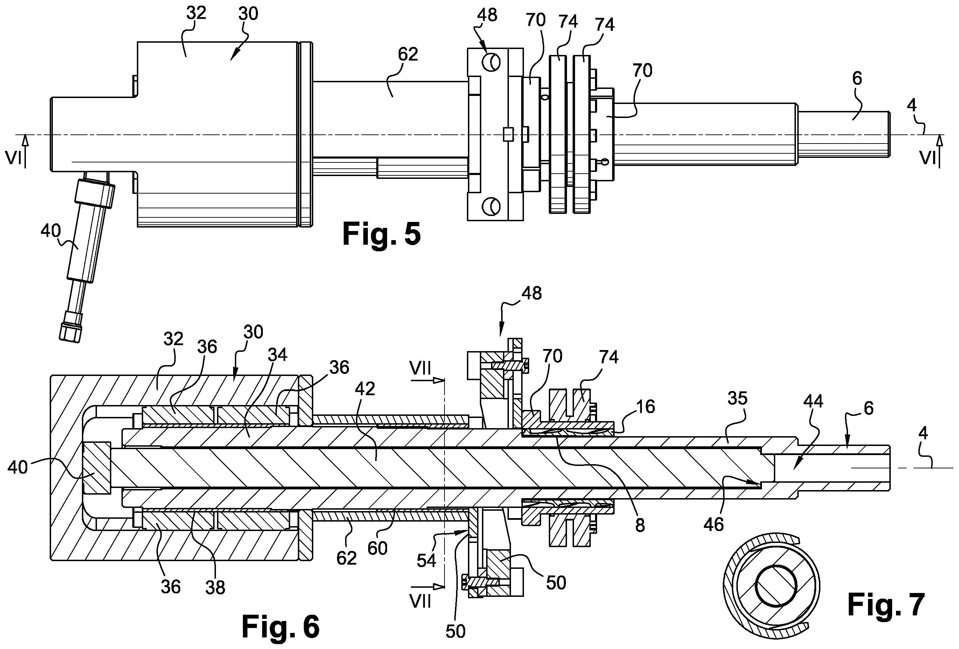

La vis 2 a une forme générale allongée à symétrie de révolution autour d'un axe longitudinal 4 de la vis. La vis comprend un support 6, en l'espèce sous la forme d'un mandrin creux comprenant une succession de tronçons ayant des faces cylindriques externes et internes à section circulaire dans un plan perpendiculaire à l'axe 4, les tronçons présentant les uns par rapport aux autres différents diamètres externes et internes. Le mandrin 6 a été illustré dans son intégralité en coupe à la figure 6.

La vis comprend plusieurs organes de fixation annulaires 8 ayant une forme générale de manchon, à symétrie de révolution. En l'espèce, chaque organe 8 présente une face interne cylindrique 10 à section circulaire dans un plan perpendiculaire à l'axe 4, et une face externe tronconique 12. Les faces cylindrique et tronconique sont coaxiales. Chaque organe 8 présente en outre dans le présent exemple au moins une fente ou rainure longitudinale 14, en l'espèce de forme plane traversant radialement l'organe de part en part et s'étendant dans la direction axiale de l'organe. Dans le cas d'une rainure unique, celle-ci s'étend de l'une à l'autre des extrémités axiales de l'organe. Dans le cas de plusieurs rainures, celles-ci s'étendent alternativement à partir d'un bord axial puis d'un autre sans déboucher sur le bord opposé. L'organe 8 est donc extensible en direction radiale.

La vis comprend en outre des manchons de travail 16 ayant une forme générale annulaire à symétrie de révolution d'axe 4. Chaque manchon 16 présente une face externe cylindrique 18 de forme circulaire dans un plan perpendiculaire à l'axe 4, et une face interne tronconique 20, les faces 18 et 20 étant coaxiales. A la différence des organes, les manchons ne sont pas fendus. La face externe 18 porte un ou plusieurs reliefs s'étendant en saillie de cette face, tels qu'un filet 20 comme illustré à la figure 2. Ces reliefs sont destinés à être en contact avec la gomme lors de l'utilisation de la vis, les faces 18 en constituant des faces externes.

Comment le voit, dans le présent exemple, l'organe et le manchon présentent chacun une unique face tronconique, ces deux faces étant destinées à venir en contact mutuel.

Par soucis de standardisation, les organes 8 sont, en règle générale, identiques les uns aux autres. Les manchons 16 et les organes 8 sont en nombre égaux et associés respectivement de façon bijective. Chaque manchon a sensiblement la même longueur que l'organe associé.

Toutefois, pour des raisons mécaniques, on s'arrangera de manière préférentielle pour que chaque organe ait une longueur légèrement inférieure, par exemple de 0,5 mm, à la longueur du manchon associé.

La face interne 10 de chaque organe 8 et la face externe 24 du mandrin 6 le recevant sont coaxiales, concentriques et en contact surfacique l'une avec l'autre. Ces deux faces sont dimensionnées de façon à réaliser un ajustement serré ou frettage de l'organe 8 sur le mandrin, cet ajustement étant suffisant à assurer une fixation rigide robuste de l'organe sur le mandrin.

On observera ici qu'en raison de la présence des fentes longitudinales 14, l'organe 8 est apte à coulisser librement sur le mandrin avant de recevoir le manchon 16.

Le montage est effectué de façon que chaque manchon, l'organe associé et le mandrin soient coaxiaux, l'organe étant interposé entre le manchon et le mandrin suivant la direction radiale à l'axe 4. Les faces tronconiques 22 du manchon et 12 de l'organe sont en contact surfacique l'une avec l'autre, les angles au sommet des deux cônes étant choisis identiques à cette fin. De plus, le manchon et l'organe correspondant sont dimensionnés de façon à réaliser un ajustement serré assurant à lui seul la fixation rigide du manchon à l'organe et donc également au mandrin. Les manchons se succèdent le long du mandrin suivant la direction de l'axe 4 en étant en contact mutuel et en butée suivant la direction axiale. En raison de leur longueur axiale légèrement inférieure à la longueur des manchons16, les organes 8 n'entrent pas en contact les uns avec les autres, de manière à permettre un serrage axial des seuls manchons 16 les uns contre les autres.

Chaque organe de fixation 8 est enfilé sur le mandrin 6 suivant la direction de l'axe 4, coaxialement à ce dernier, en même temps que le manchon 16 qui lui est associé. Cette opération est répétée autant de fois que le nombre de manchons à monter de sorte que, en fin de montage, les manchons 16 sont en butée les uns contre les autres par leurs faces d'extrémité axiales.

On constitue donc le long de la vis une série de reliefs 20 assurant selon les spécificités de la fabrication prévue le mélangeage, la mise en vitesse ou encore la mise en pression de la gomme extrudée par la vis. De préférence, les manchons 16 peuvent être différents les uns des autres de manière à assurer respectivement telle ou telle de ces fonctions.

La vis est reçue dans une cavité d'un dispositif 37 d'extrusion de la gomme.

Nous allons maintenant décrire plus en détails et en référence aux figures 4 à 7 le montage de la vis avec ses organes 8 et ses manchons 16 amovibles, puis son démontage en vue du remplacement de l'une de ses parties.

Les installations prévues à cette fin comprennent des moyens 30 pour étirer le mandrin 6 suivant la direction de son axe 4. Ces moyens comprennent ici une cloche 32 de forme générale cylindrique fermée à son extrémité gauche sur la figure 6 et ouverte à son extrémité droite. La cloche présente une paroi cylindrique au moyen de laquelle elle est rigidement fixée à la partie 34 d'extrémité axiale du mandrin formant sa partie proximale, coaxialement au mandrin. A cette fin, la partie 34 pénètre dans la cavité définie par la cloche. Cette fixation est réalisée ici par un ou plusieurs anneaux 36, par exemple ceux commercialisés sous l'appellation RingSpan, aptes à exercer une compression en direction de leur axe. On compte en l'espèce deux anneaux 36 disposés à la suite l'un de l'autre suivant la direction de l'axe 4. Une bague de protection 38 est interposée suivant la direction radiale à l'axe 4 entre chacun des anneaux et le mandrin, cette bague étant en contact direct avec le mandrin et chacun des anneaux. Les anneaux sont en contact direct par leur face externe avec la face interne de la paroi cylindrique de la cloche.

Les moyens d'étirement comprennent en outre un actionneur 40 constitué en l'espèce par un vérin, qui est ici un vérin à graisse, interposé suivant la direction axiale entre le fond de la cloche 32 d'une part et l'extrémité proximale d'un poussoir 42 d'autre part. Ce dernier a une forme rectiligne allongée à symétrie de révolution et s'étend coaxialement dans un logement 44 de circulation d'eau du mandrin. Le mandrin présente sur un tronçon d'extrémité distale 35 un épaulement intérieur 46 contre lequel vient en appui suivant la direction axiale un épaulement de l'extrémité distale du poussoir 42. De la sorte, l'actionneur 40, en appui contre le fond de la cloche, sollicite suivant la direction axiale l'extrémité proximale 34 du poussoir pour l'éloigner du fond de la cloche et donc pareillement sollicite son extrémité distale ainsi que la partie d'extrémité distale 35 du mandrin dans le même sens tendant à les éloigner de la cloche. Sachant que la partie proximale 34 du mandrin est par ailleurs retenue en sens contraire par la paroi cylindrique de la cloche, on réalise de cette façon un étirement du mandrin entre ses parties proximale et distale.

En référence à la figure 3, le montage des organes de fixation et des manchons de travail sur le mandrin s'effectue comme suit.

On suppose qu'on souhaite mettre en place l'organe et le manchon qui occupent la position la plus proche de la partie proximale 34 du mandrin et que ce dernier est étiré le long de son axe 4 comme expliqué plus haut.

On enfile, par exemple manuellement, l'organe 8 jusqu'à la position souhaitée sur le mandrin. Cette mise en place est facilitée par la ou les fentes de l'organe 8 qui lui permettent de s'ouvrir lors de son glissement sur le mandrin. L'organe est installé de sorte que la section la plus étroite de sa face tronconique 12 se trouve du côté de la partie distale du mandrin.

On enfile ensuite sur le mandrin puis sur l'organe le manchon de travail associé en mettant les deux faces tronconiques 12, 22 en contact l'une avec l'autre mais sans pousser le manchon jusqu'à sa position finale sur le cône.

On enfile sur le mandrin 6 un organe de poussée 48 comprenant deux plateaux 50 s'étendant généralement dans des plans perpendiculaires à l'axe 4, superposés l'un à l'autre suivant cette direction et en contact mutuel par des faces internes 52 parallèles l'une à l'autre mais inclinées par rapport à l'axe 4. Les deux plateaux présentent des évidements centraux leur permettant d'être enfilés sur le mandrin, ces évidements débouchant ici sur un côté du plateau pour permettre une installation latérale des plateaux sur le mandrin. Les plateaux présentent des faces principales externes 54 perpendiculaires à l'axe 4 dont l'une vient en appui contre l'extrémité distale du manchon que l'on cherche à positionner. L'organe de poussée 48 comprend un élément de serrage 56 illustré de façon complète à la figure 4. Cet élément comprend en l'espèce une tige filetée 61 s'étendant dans un plan perpendiculaire à l'axe 4 et à distance de ce dernier. Les extrémités respectives de la tige sont fixées par des écrous aux plateaux respectifs de sorte que l'actionnement des écrous pour leur rapprochement mutuel produit le glissement des faces 52 l'une contre l'autre et, par effet de coin, l'écartement l'une de l'autre des faces externes 54.

On enfile ensuite sur le mandrin une bague de verrouillage 60 et par dessus cette dernière une bague d'appui 62, chacune d'elles s'étendant sur un peu plus d'un demi-tour autour de l'axe 4 en étant ouverte latéralement. Ces deux bagues se verrouillent par rotation d'une bague autour de l'autre. Les deux bagues sont disposées de sorte que, à elles deux, elles s'étendent sur un périmètre complet du mandrin dans un plan perpendiculaire à l'axe 4. La bague de verrouillage sert au maintien en position de la bague d'appui et ferme intérieurement l'ouverture latérale de cette dernière.

On enfile ensuite sur le mandrin une butée à billes 64, ou encore une rondelle d'appui.

Puis, sur l'extrémité distale filetée du mandrin, on visse une pièce d'extrémité telle qu'une torpille 66 qui se trouve ainsi rigidement fixée au mandrin.

Les pièces suivantes se trouvent donc en appui l'une contre l'autre suivant la direction axiale et dans cet ordre : le manchon 16, l'un des plateaux 50, l'autre plateau 50, la bague d'appui 62, la butée à billes 64 et la torpille 66.

L'actionnement de l'organe de poussée 56 qui entraîne le rapprochement des plateaux l'un de l'autre produit donc par effet de coin un écartement des faces externes de ceux-ci. Comme le plateau distal est immobilisé en direction axiale par la torpille 66, c'est l'autre plateau qui provoque la poussée du manchon en direction de la cloche 32 jusqu'à atteindre sa position nominale sur l'organe 8. Par cette opération, on assure le frettage du manchon sur l'organe et de ce dernier sur le mandrin, ce qui produit la fixation rigide de ces pièces.

Pour la mise en place de l'organe 8 suivant dans la succession, on ôte la torpille 66, la butée 64, les bagues 60 et 62 et l'organe 48. Puis, on enfile l'organe 8 et le manchon correspondant 16 et on procède comme précédemment en remplaçant toutefois les bagues 62 et 60 par des bagues plus courtes. Puisque la mise en tension du mandrin s'effectue entièrement depuis l'extérieur de l'extrémité proximale de ce dernier, l'extrémité distale reste dégagée pour enfiler ou ôter des pièces.

Une fois tous les organes et les manchons en place, on interrompt l'étirement et on ôte les moyens destinés à cette fin. La détente du mandrin entraîne la mise en compression axiale des manchons 16 les uns contre les autres et leur immobilisation rigide. De plus, cette mise en compression limite l'intrusion de gomme entre les manchons lors de l'utilisation de la vis.

On peut prévoir également que la tension du mandrin est maintenue par le serrage final de la torpille 66, et ce avant de supprimer l'étirement de ce dernier. Dans ce cas, la butée à billes 62 permet de ne pas transmettre en direction de l'extrémité proximale le couple généré sur la vis par le serrage de la torpille 66 sur le mandrin.

La vis peut ensuite être installée dans le dispositif d'extrusion ou de mélangeage pour servir à la fabrication des profilés de gomme utilisés pour l'assemblage d'un pneumatique.

Le procédé de démontage de la vis est mis en oeuvre comme suit.

On effectue l'étirement du mandrin avec les moyens 30 déjà décrits.

On a illustré aux figures 4 à 6 la situation dans laquelle le manchon et l'organe que l'on souhaite ôter sont les plus proches de l'extrémité proximale du mandrin, les autres organes et manchons ayant été précédemment ôtés. L'organe 8 a une faible épaisseur de sorte qu'il est peu visible sur la figure 6.

On installe une rondelle de protection 70 contre l'extrémité distale de la cloche en appui axial contre cette dernière.

On installe une bague de verrouillage 60 puis par dessus celle-ci une bague d'appui 62 de la même façon que lors du montage sauf qu'on place cette fois la bague d'appui en butée axiale contre les moyens de serrage 30.

On met en place l'organe de poussée 48 de sorte que le plateau proximal est en butée axiale contre la bague d'appui.

La bague de protection 70 a une extrémité proximale qui est augmentée d'un rebord s'étendant en saillie de la face externe de la bague, rebord qui vient en appui axial contre le plateau distal de l'organe de poussée 48. Une face interne cylindrique de la bague vient en appui radial contre les reliefs 20 du manchon 16 en plusieurs endroits autour de la circonférence du manchon et le long de ce dernier.

On installe sur la bague un ou plusieurs anneaux de compression 74 tels que ceux précités. Ces anneaux, ici au nombre de deux, sont disposés côte-à-côte et se succèdent le long de l'axe 4. Chaque anneau est en appui contre la face externe cylindrique de la bague 70 afin de solliciter celle-ci radialement en compression pour assurer une fixation rigide robuste par friction de la bague 70 au manchon 16.

L'actionnement de l'organe de poussée 48 provoque par effet de coin l'écartement des pièces en appui contre celui-ci. Le plateau proximal étant immobilisé par appui contre la cloche, c'est le plateau distal qui se déplace et qui pousse la bague de protection avec le manchon 16 en direction de l'extrémité distale du mandrin. Le manchon se trouve ainsi éloigné de l'organe de fixation. Une fois qu'un éloignement suffisant a été obtenu, on peut ôter les anneaux 74 et la bague de protection 70 puis achever de démonter à la main le manchon 16 puis l'organe de fixation 8.

Le démontage précédent des autres manchons et organes a été effectué de façon analogue. On prévoit cependant de remplacer les bagues 60 et 62 par des bagues plus longues recouvrant en outre les manchons encore fixés, à l'exception de celui qui doit être démonté. On remarque que chaque organe 8 dont le manchon 16 a été ôté se trouve poussé par le manchon suivant lors du démontage de ce dernier, compte tenu des formes tronconiques de ces pièces.

Si les coefficients de dilatation des matériaux en présence le permettent, on peut aussi faciliter le montage et le démontage des pièces en chauffant la vis, en remplacement de son étirement.

On donne ci-après des exemples non limitatifs concernant des caractéristiques dimensionnelles des différentes pièces :
- mandrin :
   - diamètre extérieur recevant les organes et les manchons: 67 mm
   - tolérance : g6 (-10/-29 µm)
   - état de surface : Ra 0,8
- organe de fixation 8 :
   - diamètre intérieur : 67 mm
   - tolérance : -0,03, -0,05 mm
   - angle au sommet de la face externe : 1°
   - plus grand diamètre de la face externe : 69,7 mm
- manchon 16 :
   - angle au sommet : 1°
   - plus petit diamètre de la face externe: 68 mm
   - prévoir d'obtenir avant serrage un dépassement de la face tronconique du manchon par rapport à l'organe de 3 à 7 mm en direction axiale.

Après montage, la pression de surface engendrant les forces de serrage du manchon, de l'organe et du mandrin est comprise entre 17 et 29 MPa.

Les matériaux employés peuvent être à titre d'exemple les suivants :
- mandrin 6 : acier de référence APX 4 fourni par la Sté Aubert et Duval, ou celui de référence 4418 de la Sté Ugine.
- organe de fixation : ébauche tubulaire en acier inoxydable extrudé, finie à chaud sans soudure.

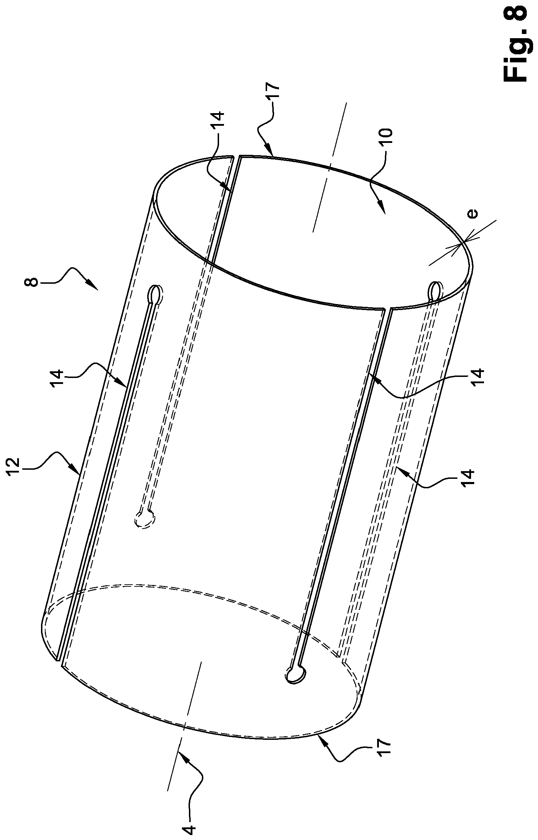

On a illustré à la figure 8 une variante de réalisation des organes de fixation 8. Comme précédemment, l'organe 8 présente une face interne cylindrique 10 et une face externe tronconique 12 coaxiales. L'organe 8 présente dans le présent exemple quatre fentes ou rainures rectilignes longitudinales 14, traversant radialement l'épaisseur de la paroi de l'organe et parallèles à la direction axiale. Les fentes sont régulièrement réparties autour de l'axe 4. Elles s'étendent alternativement à partir des bords axiaux respectifs 17 de l'organe, sans déboucher sur le bord opposé. Les fentes sont donc réparties par paires, les fentes de chaque paire étant diamétralement opposées et s'étendant à partir du même bord d'extrémité axiale de l'organe. Les quatre fentes ont la même forme et les mêmes dimensions. Chacune s'étend sur une fraction de la longueur de l'organe supérieure à 50 % de cette longueur, et même en l'espèce à 75 % et 80 % de cette longueur. L'extrémité aveugle de chaque fente, c'est-à-dire extrémité qui ne débouche pas à un bord d'extrémité axiale du manchon, présente une configuration en arc de cercle pour éviter l'apparition d'une amorce de rupture dans le matériau à cet endroit. L'organe 8 est particulièrement extensible en direction radiale.

Indépendamment de ces caractéristiques sur la forme, la disposition et le nombre des fentes, cet organe présente une plus grande épaisseur de paroi inférieure à 10 mm et même inférieure à 3 mm. L'épaisseur de la paroi va en l'espèce de 0,5 à 1,2 mm compte tenu de la forme tronconique de la face externe. Il est avantageux de prévoir les mêmes conditions dimensionnelles pour les organes 8 du mode de réalisation des figures précédentes. Cette épaisseur de paroi relativement faible facilite la transmission des efforts de serrage entre le support et le manchon.

On observe que dans les exemple qui précèdent chaque manchon est directement fixé à l'organe correspondant sans qu'ils soient reliés l'un à l'autre par un élément de fixation intermédiaire. Les seuls organes additionnels qui peuvent être nécessaires éventuellement sont ceux qui permettent de mettre en place cette fixation et de la défaire.

L'invention est particulièrement bien adaptée à l'extrusion et au mélangeage de produits plastiques dont certains au moins sont synthétiques.

Bien entendu, on pourra apporter à l'invention de nombreuses modifications sans sortir du cadre de celle-ci.

On a décrit plus haut des exemples dans lesquels la ou les fentes sont rectilignes et parallèles à un axe de la vis. Toutefois, on pourrait donner à la fente ou aux fentes d'autres formes et/ou d'autres dispositions. Par exemple, on pourrait prévoir que la fente ou chaque fente présente une forme hélicoïdale, l'axe de l'hélice étant l'axe 4.

## Revendications

1. Vis (2) destinée à l'extrusion ou au mélangeage d'élastomères ou de produits plastiques, comprenant :
- un support (6),
- au moins un manchon (16) présentant au moins un relief (20) s'étendant en saillie d'une face externe du manchon, et
- au moins un organe de fixation annulaire fendu (8),
**caractérisé en ce que** l'organe est serré entre le manchon et le support suivant une direction radiale à un axe (4) de la vis de façon à fixer rigidement le manchon au support (6), l'organe (8) et le manchon (16) présentant des faces tronconiques (22, 12) de contact mutuel.

2. Vis selon la revendication précédente dans laquelle le manchon ou l'un au moins des manchons (16) présente une épaisseur de paroi inférieure ou égale à 10 mm et de préférence inférieure ou égale à 3 mm.

3. Vis selon au moins l'une quelconque des revendications précédentes dans laquelle l'organe ou l'un au moins des organes de fixation (8) est fendu suivant une direction parallèle à un axe principal (4) de l'organe.

4. Vis selon au moins l'une quelconque des revendications précédentes dans laquelle l'organe de fixation présente au moins deux fentes (14), par exemple au moins quatre fentes.

5. Vis selon la revendication précédente dans laquelle les fentes (14) ou au moins deux des fentes s'étendent à partir de bords d'extrémité respectifs différents de l'organe.

6. Vis selon au moins l'une quelconque des revendications précédentes dans laquelle l'organe (8) présente une longueur totale inférieure à une longueur totale du manchon (16).

7. Vis selon au moins l'une quelconque des revendications précédentes dans laquelle l'organe de fixation est en contact avec le manchon par une face de contact tronconique unique (12) de l'organe.

8. Dispositif (37) d'extrusion ou de mélangeage d'élastomères ou de produits plastiques, **caractérisé en ce qu'**il comprend une vis (2) selon au moins l'une quelconque des revendications précédentes.

9. Procédé d'assemblage d'une vis (2) destinée à l'extrusion ou au mélangeage d'élastomères ou de produits plastiques, dans lequel on serre suivant une direction radiale à un axe (4) de la vis un organe de fixation annulaire fendu (8) entre un support (6) et un manchon (16) présentant au moins un relief (20) s'étendant en saillie d'une face externe du manchon, de sorte que l'organe et le manchon sont en contact mutuel par des faces tronconiques (22, 12) de l'organe (8) et du manchon (16) et de façon à fixer rigidement le manchon au support.

10. Procédé selon la revendication précédente dans lequel on monte le manchon (16) à force sur le support (6).

11. Procédé selon au moins l'une quelconque des revendications 9 à 10 dans lequel on étire le support (6).

12. Procédé selon au moins l'une quelconque des revendications 9 à 11 dans lequel, en prenant appui sur un tronçon proximal (34) du support, on pousse un tronçon distal (35) du support au moyen d'un poussoir intérieur (42) émergeant du tronçon proximal et en butée contre le tronçon distal.

13. Procédé selon au moins l'une quelconque des revendications 9 à 12 dans lequel on monte l'organe (8) sur le support (6), puis on pousse le manchon (16) sur l'organe.

14. Procédé selon au moins l'une quelconque des revendications 9 à 13 dans lequel, les manchons (16) étant au moins au nombre de deux, on monte les manchons sur le support de telle sorte que, une fois l'assemblage achevé, les manchons sont en compression axiale mutuelle.

15. Procédé de démontage d'une vis (2) selon au moins l'une quelconque des revendications 1 à 7, **caractérisé en ce qu'**on étire le support.

## Patentansprüche

1. Schnecke (2), welche zum Strangpressen oder zum Mischen von Elastomeren oder von Kunststofferzeugnissen bestimmt ist, umfassend:
- einen Träger (6),
- wenigstens eine Buchse (16), die wenigstens eine Erhöhung (20) aufweist, die sich von einer Außenseite der Buchse aus vorstehend erstreckt, und
- wenigstens ein geschlitztes ringförmiges Befestigungsorgan (8),
**dadurch gekennzeichnet, dass** das Organ zwischen der Buchse und dem Träger entlang einer zu einer Achse (4) der Schnecke radialen Richtung eingespannt ist, so dass die Buchse starr an dem Träger (6) befestigt wird, wobei das Organ (8) und die Buchse (16) kegelstumpfförmige gegenseitige Kontaktflächen (22, 12) aufweisen.

2. Schnecke nach dem vorhergehenden Anspruch, wobei die Buchse oder wenigstens eine der Buchsen (16) eine Wanddicke aufweist, die kleiner oder gleich 10 mm und vorzugsweise kleiner oder gleich 3 mm ist.

3. Schnecke nach wenigstens einem der vorhergehenden Ansprüche, wobei das Befestigungsorgan oder wenigstens eines der Befestigungsorgane (8) in einer Richtung geschlitzt ist, die zu einer Hauptachse (4) des Organs parallel ist.

4. Schnecke nach wenigstens einem der vorhergehenden Ansprüche, wobei das Befestigungsorgan wenigstens zwei Schlitze (14) aufweist, zum Beispiel wenigstens vier Schlitze.

5. Schnecke nach dem vorhergehenden Anspruch, wobei die Schlitze (14) oder wenigstens zwei der Schlitze sich von verschiedenen jeweiligen Endrändern des Organs aus erstrecken.

6. Schnecke nach wenigstens einem der vorhergehenden Ansprüche, wobei das Organ (8) eine Gesamtlänge aufweist, die kleiner als eine Gesamtlänge der Buchse (16) ist.

7. Schnecke nach wenigstens einem der vorhergehenden Ansprüche, wobei sich das Befestigungsorgan über eine einzige kegelstumpfförmige Kontaktfläche (12) des Organs mit der Buchse in Kontakt befindet.

8. Vorrichtung (37) zum Strangpressen oder zum Mischen von Elastomeren oder von Kunststofferzeugnissen, **dadurch gekennzeichnet, dass** sie eine Schnecke (2) nach wenigstens einem der vorhergehenden Ansprüche umfasst.

9. Verfahren zur Montage einer Schnecke (2), welche zum Strangpressen oder zum Mischen von Elastomeren oder von Kunststofferzeugnissen bestimmt ist, wobei ein geschlitztes ringförmiges Befestigungsorgan (8) entlang einer zu einer Achse (4) der Schnecke radialen Richtung zwischen einem Träger (6) und einer Buchse (16), die wenigstens eine Erhöhung (20) aufweist, die sich von einer Außenseite der Buchse aus vorstehend erstreckt, eingespannt wird, derart, dass sich das Organ und die Buchse über kegelstumpfförmige Flächen (22, 12) des Organs (8) und der Buchse (16) in Kontakt miteinander befinden, und so, dass die Buchse starr an dem Träger befestigt wird.

10. Verfahren nach dem vorhergehenden Anspruch, wobei die Buchse (16) auf den Träger (6) aufgepresst wird.

11. Verfahren nach wenigstens einem der Ansprüche 9 bis 10, wobei der Träger (6) gezogen wird.

12. Verfahren nach wenigstens einem der Ansprüche 9 bis 11, wobei, unter Abstützung auf einem proximalen Teilabschnitt (34) des Trägers, ein distaler Teilabschnitt (35) des Trägers mittels eines inneren Stößels (42) geschoben wird, der aus dem proximalen Teilabschnitt herausragt und sich im Anschlag an dem distalen Teilabschnitt befindet.

13. Verfahren nach wenigstens einem der Ansprüche 9 bis 12, wobei das Organ (8) auf dem Träger (6) angebracht wird und anschließend die Buchse (16) auf das Organ aufgeschoben wird.

14. Verfahren nach wenigstens einem der Ansprüche 9 bis 13, wobei, wenn die Anzahl der Buchsen (16) wenigstens zwei beträgt, die Buchsen derart auf dem Träger angebracht werden, dass die Buchsen, nachdem die Montage beendet ist, eine gegenseitige axiale Kompression ausüben.

15. Verfahren zur Demontage einer Schnecke (2) nach wenigstens einem der Ansprüche 1 bis 7, **dadurch gekennzeichnet, dass** der Träger gezogen wird.

## Claims

1. Screw (2) intended for the extrusion or mixing of elastomers or plastic products, **characterized in that** it comprises:
- a support (6),
- at least one sleeve (16) having at least one relief (20) projecting from an external face of the sleeve, and
- at least one split annular securing member (8),
**characterised in that** the member is tightened between the sleeve and the support in a radial direction with respect to an axis (4) of the screw so as to secure the sleeve rigidly to the support (6), the member (8) and the sleeve (16) having frustoconical faces (22, 12) in mutual contact.

2. Screw according to the preceding claim, in which the sleeve, or at least one of the sleeves (16), exhibits a wall thickness smaller than or equal to 10 mm and preferably smaller than or equal to 3 mm.

3. Screw according to at least one of the preceding claims, in which the member or the one at least of the securing members (8) is split in a parallel direction with respect to a principal axis (4) of the member.

4. Screw according to at least one of the preceding claims, in which the securing member exhibits at least two splits (14), for example at least four splits.

5. Screw according to the preceding claim, in which the splits (14) or at least two of the splits extend from respective different end edges of the member.

6. Screw according to at least one of the preceding claims, in which the member (8) exhibits a total length lower than a total length of the sleeve (16).

7. Screw according to at least one of the preceding claims, in which the securing member is in contact with the sleeve via a single frustoconical contact face (12) of the member.

8. Device (37) for the extrusion or mixing of elastomers or plastic products, **characterized in that** it comprises a screw (2) according to at least one of the preceding claims.

9. Method of assembling a screw (2) intended for the extrusion or mixing of elastomers or plastic products, wherein a split annular securing member (8) is tightened in a radial direction with respect to an axis (4) of the screw between a support (6) and a sleeve (16) having at least one relief (20) projecting from an external face of the sleeve, such that the member and the sleeve are in mutual contact via frustoconical faces (22, 12) of the member (8) and the sleeve (16) and so as to secure the sleeve rigidly to the support.

10. Method according to the preceding claim, in which the sleeve (16) is press-fitted on the support (6).

11. Method according to at least one of Claims 9 to 10, in which the support (6) is extended.

12. Method according to at least one of Claims 9 to 11, in which, by bearing against a proximal section (34) of the support, a distal section (35) of the support is pushed by means of an internal plunger (42) emerging from the proximal section and in abutment against the distal section.

13. Method according to at least one of Claims 9 to 12, in which the member (8) is fitted on the support (6), and the sleeve (16) is then pushed onto the member.

14. Method according to at least one of Claims 9 to 13, in which, the sleeves (16) being at least two in number, the sleeves are fitted on the support in such a way that, once the assembly has been completed, the sleeves are in mutual axial compression.

15. Method of disassembly of a screw (2) according to at least one of Claims 1 to 7, **characterized in that** the support is extended.
